Europäisches Patentamt

**European Patent Office**

Office européen des brevets

(19)

(11) Numéro de publication: **0 028 993**
**B1**

(12) **FASCICULE DE BREVET EUROPEEN**

(45) Date de publication du fascicule du brevet:
20.07.83

(51) Int. Cl.³: **H 05 B 7/14**

(21) Numéro de dépôt: **80420117.6**

(22) Date de dépôt: **04.11.80**

(54) **Joint biconique pour électrode de four.**

(30) Priorité: **09.11.79 FR 7928144**

(43) Date de publication de la demande:
**20.05.81 Bulletin 81/20**

(45) Mention de la délivrance du brevet:
**20.07.83 Bulletin 83/29**

(84) Etats contractants désignés:
**AT BE CH DE GB IT LI LU NL SE**

(56) Documents cités:
DE-A-2 555 688
FR-A-1 062 015
FR-A-1 417 007
FR-A-2 151 128
FR-A-2 394 225
JP-A-52 067 041
US-A-4 152 533

(73) Titulaire: **SOCIETE DES ELECTRODES ET REFRACTAIRES SAVOIE (SERS), 12, rue du Général Foy, F-75008 Paris (FR)**

(72) Inventeur: **Boudeau, Jean-Michel, Cité Jardin "Les Sapins", Chedde F-74190 Le Fayet (FR)**
Inventeur: **Logue, Michel, Horizon Sud 35, Boulevard de l'Europe, F-69110 Sainte-Foy-les-Lyon (FR)**
Inventeur: **Parisot, Claude, Cité Jardin "Les Chênes", Chedde F-74190 Le Fayet (FR)**

(74) Mandataire: **Givord, Jean-Pierre et al, PECHINEY UGINE KUHLMANN 28, rue de Bonnel, F-69433 Lyon Cedex 3 (FR)**

Joint biconique pour électrode de four

Le joint d'électrode qui fait l'objet de l'invention constitue un perfectionnement par rapport aux joints classiques, comportant un raccord biconique fileté (nipple), utilisés pour l'assemblage d'électrodes en graphite. Il convient plus particulièrement pour les électrodes en graphite utilisées dans les fours à arc tels que les fours d'aciérie.

Il est bien connu de l'homme de l'art que le joint biconique constitue le point faible d'une colonne d'électrodes. Au cours des variations de température extrêmement rapides que subissent les électrodes dans certains types de fours, on constate assez fréquemment des ruptures de joints biconiques entraînant des chutes de morceaux d'électrodes dans le four. De tels incidents perturbent gravement le fonctionnement du four. L'expérience a montré que la qualité du montage d'un joint biconique avait une grande importance et qu'il fallait, en particulier, essayer de répartir aussi bien que possible les jeux entre les filets du raccord biconique et ceux des logements creusés dans les deux extrémités d'électrodes en regard. Malheureusement, dans la pratique, cette répartition est le plus souvent le résultat du hasard. En général, on visse à fond une extrémité du raccord biconique dans le logement fileté dont est pourvue l'extrémité d'une électrode, puis on engage ensuite l'autre extrémité de ce raccord biconique dans le logement fileté de l'autre électrode et, au moment du blocage des deux électrodes l'une par rapport à l'autre, on constate que le raccord biconique se trouve bloqué à fond dans le logement de la première électrode et, de ce fait, présente plutôt trop de jeu dans le logement de la deuxième électrode.

Parmi les solutions qui ont déjà été proposées pour résoudre ce problème de la répartition des jeux, on peut signaler, en particulier, celle qui fait l'objet de la demande de brevet français N° 1241362 déposée le 7 novembre 1959. Selon cette demande, afin d'éviter un serrage excessif du raccord biconique dans le logement de l'électrode, on place une ou plusieurs pièces d'écartement entre certains filets de ce raccord biconique et les filets correspondants du logement.

Ces pièces d'écartement doivent être en un matériau stable qui ne se déforme pas à la température d'utilisation. Selon une autre possibilité, également décrite dans cette demande de brevet, on peut, au lieu d'introduire une pièce d'écartement, augmenter l'épaisseur d'une ou de plusieurs spires du filetage d'une quantité déterminée. Cette surépaisseur est réalisée sur le flanc d'un filet du raccord biconique ou du logement.

L'expérience a montré que la solution proposée, bien qu'elle constitue un progrès, ne permet cependant pas d'éviter d'une façon générale les ruptures de joints comportant des raccords biconiques filetés, causées par des contraintes thermiques ou thermomécaniques. De plus, la réalisation de surépaisseurs localisées sur une face d'un filet présente des difficultés, du point de vue usinage, qui entraînent un accroissement important des coûts de réalisation de ces joints.

Dans la demande de brevet JP N° 52.67041, il est proposé de réaliser une jonction entre des électrodes pour four à arc au moyen d'un raccord biconique, dans laquelle le jeu entre le filetage du raccord et celui du logement des deux électrodes passe par une valeur minimale à mi-distance entre le plan de la jonction et le fond du logement.

On a, par ailleurs, effectué des études approfondies qui ont montré que beaucoup de ruptures de joints comportant des raccords biconiques filetés résultent de deux systèmes de contraintes:

1) des contraintes de dilatation qui se traduisent, en général, par des efforts de traction sur le raccord biconique fileté suivant son axe, et par des efforts tangentiels qui s'exercent sur les parois des logements filetés des électrodes,

2) des contraintes mécaniques dues aux conditions d'utilisation des électrodes qui s'exercent le plus souvent latéralement et tendent à courber la colonne d'électrodes. Ces contraintes se combinent avec les précédentes, et leur résultante peut provoquer la rupture du joint. Les essais effectués au cours de ces études ont montré que les contraintes les plus grandes se développaient, d'une part, au niveau du plan de jonction des électrodes et, d'autre part, au niveau des fonds de logement. Par contre, les contraintes exercées sur les parois des logements passent par un minimum, dans une zone intermédiaire située sensiblement entre le dixième et le quart de la hauteur du filetage du logement en prise avec le raccord biconique fileté, hauteur mesurée à partir du fond de ce logement.

On a donc recherché les moyens d'obtenir entre les filets du raccord biconique et ceux du logement d'électrode un jeu variable le long de la génératrice, la loi de variation de ce jeu étant établie en fonction des contraintes thermomécaniques susceptibles de se développer. Pour atteindre ce résultat, il fallait aussi rechercher les moyens d'obtenir, au moment du montage du joint, une répartition symétrique du jeu, de part et d'autre du plan de jonction des filets du raccord biconique engagés dans chacun des deux logements d'électrode.

Pour résoudre ce problème dans son ensemble, on a d'abord eu l'idée de réaliser, de chaque côté du plan de jonction, une variation progressive du jeu entre les filets du raccord biconique et ceux de chacun des deux logements d'électrode. Ce jeu est mesuré par l'écart entre le diamètre sur flanc, appelé aussi diamètre primitif, du filetage du raccord et celui du logement d'électrode. Le jeu le plus faible se trouve, de préférence, situé à un niveau entre le dixième et le quart de la hauteur de la partie filetée du logement en prise avec le raccord, mesurée à partir du fond, les jeux les plus élevés étant réalisés aux deux extrémités du filetage, c'est-à-dire à l'extrémité de petit diamètre et au niveau du plan de jonction. Ainsi, quand la colonne d'électrodes est sollicitée par des contraintes transversales qui tendent à la faire fléchir, ces contraintes sont en partie absorbées par de légers déplacements transversaux des extrémités du raccord biconique dans les fonds des logements filetés, et aussi au niveau du plan de jonction par de légers déplacements de la zone de grand diamètre de ce raccord par rapport aux bords supérieurs des parois des logements filetés.

De plus, grâce à un usinage spécial des filets du raccord biconique ou du logement, on réalise une zone annulaire de butée dans le sens axial, au niveau de un à trois filets du filetage du logement ou de la partie correspondante du raccord biconique, cette zone se trouvant de préférence entre le tiers et la moitié de la hauteur de filetage en prise, mesurée à partir de l'extrémité de petit diamètre. Cette zone de butée permet, au moment du vissage du raccord biconique dans son logement, de provoquer l'arrêt du vissage par serrage des flancs longs des filets du raccord contre les flancs longs des filets du logement. On comprend ainsi que le joint biconique, qui fait l'objet de l'invention, présente une résistance tout à fait exceptionnelle aux contraintes thermomécaniques, ce qui permet d'éliminer la plupart des causes de rupture en service. Par ailleurs, comme on le verra plus loin, ce joint biconique peut être réalisé de façon très économique sans augmentation notable des coûts par rapport à ceux des joints biconiques habituels.

Différents modes de réalisation des joints biconiques suivant l'invention sont possibles. L'exemple non limitatif ci-après décrit un mode de réalisation avantageux.

Les figures suivantes permettent de mieux comprendre cet exemple:

la fig. 1 représente, de façon schématique, en élévation et en coupe, un joint biconique suivant l'invention,

la fig. 2 est une vue d'une partie du raccord biconique de la fig. 1 en coupe,

la fig. 3 est une vue de détail agrandie de quelques filets du raccord biconique de la fig. 1 dans la zone de butée.

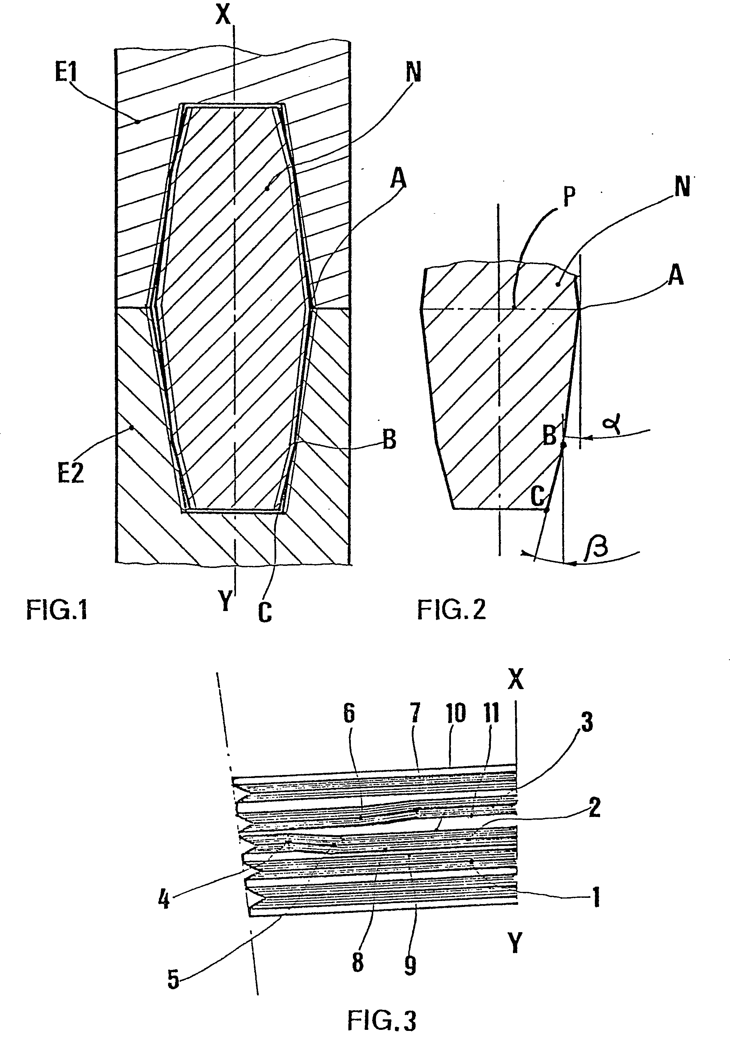

La fig. 1 représente la jonction de deux électrodes E1 et E2 de 500 mm de diamètre, assemblées par un raccord biconique N fileté au pas de 6,35 mm par filet (quatre filets par pouce). Ce raccord biconique comporte, comme toujours, deux parties tronconiques opposées par leur grande base suivant un plan équatorial P (fig. 2). Habituellement, conformément aux normes internationales en usage, la pente de chacun des deux troncs de cône, exprimée par la tangente de l'angle de leur génératrice avec l'axe du raccord, est de 1/6. Dans le cas du raccord suivant l'invention, on voit (fig. 2) que cette pente prend deux valeurs successives. Sur une longueur AB, la génératrice du cône fileté fait un angle $\alpha$ avec l'axe XY. Au-delà du point B, la génératrice BC fait un angle $\beta$ avec l'axe XY.

Dans le cas présent, on a: tg $\alpha$=0,165
tg $\beta$=0,190

On voit donc que l'angle $\alpha$ est légèrement inférieur à l'angle habituel, et l'angle $\beta$ est très sensiblement supérieur à l'angle habituel. L'autre partie du raccord biconique, symétrique par rapport au plan P, est usinée de façon identique.

En ce qui concerne les deux logements d'électrodes, ceux-ci sont filetés avec la pente habituelle de 1/6 sur toute la longueur de la génératrice, comme le montre la fig. 1.

Dans le cas de ce raccord biconique qui comporte 26 filets de part et d'autre du plan équatorial, la longueur AB correspond à 22 filets et la longueur BC à 4 filets. On voit donc que, lorsque ce raccord sera vissé dans le logement d'électrode, c'est dans la zone B que sera réalisé le minimum de jeu, entre les filets du raccord et ceux du logement. De plus, on réalise entre le dixième et le douzième filet du raccord, à partir de l'extrémité, une zone de butée permettant d'arrêter avec précision le serrage du raccord dans ce logement.

Dans le mode de réalisation de cet exemple, cette zone de butée est obtenue en décalant d'une fraction de millimètre, en direction de l'extrémité de petit diamètre du raccord, l'outil qui creuse les sillons afin de former les filets. Au-delà de cette zone, la position de l'outil est rajustée suivant le calage normal.

La fig. 3 montre, de façon schématique, une demi-vue limitée par l'axe XY de la zone dans laquelle ce décalage est effectué. On voit que la largeur des sillons n'est pas modifiée par le décalage de l'outil, mais seulement l'épaisseur des filets eux-mêmes, encadrant le sillon décalé. Si on raisonne dans le cas où l'outil creuse le sillon à partir de l'extrémité de petit diamètre du raccord biconique, ce sillon décalé, repéré 2, est légèrement rapproché du sillon 1 précédent et, donc, légèrement éloigné du sillon 3 qui a été formé après recalage de l'outil qui lui a fait rattraper son retard. On observe que le décalage de l'outil est effectué de façon progressive sur une certaine longueur de filet comprise, dans le cas de la fig. 3, entre les points 4 et 5. Le recalage est de même effectué sur une longueur comprise entre les points 6 et 7. Ces longueurs dépendent de la vitesse à laquelle sont effectués ces réglages et de la vitesse circonférentielle d'usinage. Dans le cas du présent exemple, le filet 2 a été décalé de 0,12 mm, c'est-à-dire rapproché du filet 1 de cette valeur. Sur la fig. 3, ce décalage a été volontairement exagéré pour le rendre bien visible. Comme la largeur des sillons est constante, on voit qu'un tel décalage a réduit la distance entre les bords 8 et 9 des sillons 1 et 2 de la même valeur. Il en résulte, au contraire, une augmentation égale de la distance entre les bords 10 et 11 des sillons 2 et 3. Le décalage du sillon 2, réalisé dans les conditions qui viennent d'être décrites, a pour conséquence que toute la surface du flanc de filet comprise entre le bord 10 et le fond du sillon joue le rôle de butée au moment du vissage du raccord biconique dans le logement fileté correspondant de l'électrode. Ce flanc de filet, qui est un flanc long orienté en direction du fond du logement, arrêtera le vissage du raccord avant que celui-ci soit serré contre le fond du logement et permettra de conserver, à froid, dans la direction axiale, un jeu entre les autres flancs longs de filets du raccord et les flancs de filets correspondants du logement. Contrairement à ce qu'on pourrait attendre, on n'observe pas de rupture du filet qui joue le rôle de butée, ou de celui contre lequel il vient en appui lorsque la jonction ainsi réalisée est portée à haute température. Les essais ont montré qu'il se produit seulement une légère déformation des surfaces en contact. On n'observe pas non plus de rupture du raccord biconique ou des parois du logement d'électrode. Des études ont montré, en effet, que les contraintes qui apparaissent au niveau de la zone de butée sont nettement inférieures à celles susceptibles de provoquer la rupture du raccord ou des parois du logement usiné dans l'électrode.

Un tel résultat est dû, en particulier, au choix judicieux de la zone de butée qui doit être suffisamment éloignée de la zone de jonction et ne doit pas non plus être trop proche du point de changement de pente. En effet, c'est au point B (voir fig. 1 et 2) que se développeront les contraintes transversales les plus importantes au moment de la montée en température du joint biconique, puisque c'est là que les jeux sont les plus faibles. On préfère donc placer la zone de butée au-delà du point B entre le tiers et la moitié de la hauteur du filetage en prise mesurée à partir des extrémités de petit diamètre.

Bien que la valeur de 0,12 mm soit proche de l'optimum, on peut réaliser des décalages de filet suivant l'invention dans un intervalle compris entre 0,08 et 0,20 mm. Le mode de mise en œuvre de l'invention qui vient d'être décrit, dans le cas de filetages au pas de 6,35 mm (quatre filets par pouce), est transposable au cas de jonctions filetées à des pas différents, par exemple au pas de 8,47 mm (trois filets par pouce).

Quelle que soit la méthode utilisée, on doit éviter de réduire l'épaisseur des filets décalés afin qu'ils puissent supporter sans rupture les contraintes de serrage. Un avantage de la méthode de décalage du sillon est que non seulement elle ne réduit pas l'épaisseur du ou des filets décalés, mais qu'elle accroît, au contraire, l'épaisseur du premier filet. Dans le cas où le décalage est maintenu sur deux ou trois filets, seul le premier filet présente une épaisseur accrue. Les filets suivants conservent l'épaisseur normale.

Bien que, dans l'exemple, le jeu le plus faible soit obtenu en B à la rencontre des génératrices AB et BC, il peut y avoir intérêt à réaliser en B, sur le raccord biconique, une zone annulaire s'étendant sur quelques filets et dont la génératrice est parallèle à celle du logement. Dans ce cas, la pente du raccord biconique prendra trois valeurs successives. Mais, de toute façon, la zone B devra être entièrement comprise entre le dixième et le quart de la hauteur du filetage en prise, mesurée à partir du fond du logement.

Par ailleurs, les modifications de pente et la zone de butée, qui sont réalisées dans l'exemple sur le raccord biconique, peuvent tout aussi bien être réalisées sur les logements d'électrodes, le raccord biconique conservant alors sa pente normale et son filetage sans décalage.

On peut aussi envisager de répartir entre le raccord biconique et les logements filetés les modifications de pente et le décalage des filets dans la zone de butée. Il convient de remarquer que, si les modifications de pente portent sur l'usinage des logements filetés, la pente de la zone qui s'étend à partir du plan de jonction en direction du fond du logement doit être plus forte que la pente moyenne du raccord biconique: au contraire, la pente de la zone qui s'étend à partir du fond du logement en direction du plan de jonction doit être plus faible que cette pente moyenne.

Les modifications de pente suivant l'invention qui permettent de faire varier le jeu peuvent aussi, éventuellement, être effectuées au moins partiellement de façon continue, la génératrice du raccord biconique ou celle du logement fileté ayant alors, en partie au moins, une forme curviligne.

## Revendications

1. Jonction comprenant un raccord biconique fileté pour électrode de four, dans laquelle, de part et d'autre du plan de jonction (P), le jeu entre le filetage du raccord (N) et celui des logements des deux électrodes (E1, E2) passe par une valeur minimale en un endroit situé dans la partie courante du filetage, caractérisée en ce que ledit endroit est situé entre environ le dixième et le quart de la hauteur du filetage en prise, telle qu'elle est mesurée dans chaque logement à partir du fond de celui-ci.

2. Jonction pour électrode de four suivant la revendication 1, caractérisée en ce que, de part et d'autre du plan de jonction (P), le filetage du raccord biconique comporte au moins deux zones ayant des pentes différentes de la pente moyenne du logement: une zone de pente plus faible (AB) qui s'étend à partir du plan de jonction en direction de l'extrémité du raccord et une zone de pente plus forte (CB) qui s'étend à partir de l'extrémité du raccord en direction du plan de jonction.

3. Jonction comprenant un raccord biconique fileté suivant l'une des revendications 1 ou 2, caractérisée en ce que le raccord (N) présente, de part et d'autre du plan de jonction (P), une zone (B) de même pente que celle du logement correspondant, comprise entre deux zones de pente différente.

4. Jonction suivant l'une des revendications 1 à 3, caractérisée en ce qu'une zone de butée est réalisée entre le tiers et la moitié de la hauteur de filetage en prise, telle que mesurée dans chaque logement à partir du fond de celui-ci.

5. Jonction suivant la revendication 4, caractérisée en ce que, dans la zone de butée, le flanc long du filet (2) du raccord biconique est décalé de 0,08 à 0,20 mm en direction du fond du logement.

6. Jonction suivant l'une des revendications 1 ou 4, caractérisée en ce que, de part et d'autre du plan de jonction, le filetage de chacun des logements comporte au moins deux zones ayant des pentes différentes de la pente moyenne du raccord: une zone de pente plus forte qui s'étend à partir du plan de jonction en direction du fond du logement, et une zone de pente plus faible qui s'étend à partir du fond du logement en direction du plan de jonction.

7. Jonction suivant l'une des revendications 1, 2, 3, 4 ou 6, caractérisée en ce que, dans la zone de butée, le flanc long du filet du logement est décalé de 0,08 à 0,20 mm en direction du plan de jonction.

8. Jonction suivant l'une des revendications 1, 4, 5, 6 ou 7, caractérisée en ce que la pente du filetage du raccord biconique ou du logement varie de façon continue.

## Patentansprüche

1. Verbindung mit einem doppelkonischen Gewindeverbindungsstück für Ofenelektrode, in der zu beiden Seiten der Verbindungsebene (P) das Spiel zwischen dem Gewinde des Verbindungsstücks (N) und dem der Ausnehmungen der beiden Elektroden (E1, E2) durch einen Minimalwert an einer im laufenden Teil des Gewindes liegenden Stelle geht, dadurch gekennzeichnet, dass diese Stelle zwischen etwa dem Zehntel und dem Viertel der Höhe des Gewindes im Eingriff liegt, wie sie in jeder Ausnehmung von deren Boden aus gemessen wird.

2. Verbindung für Ofenelektrode nach Anspruch 1, dadurch gekennzeichnet, dass das Gewinde des doppelkonischen Verbindungsstücks zu beiden Seiten der Verbindungsebene (P) wenigstens zwei Zonen mit von der mittleren Neigung der Ausnehmung verschiedenen Neigungen aufweist: eine Zone schwächerer Neigung (AB), die sich von der Verbindungsebene in Richtung des Endes des Verbindungsstücks erstreckt, und eine Zone stärkerer Neigung (CB), die sich vom Ende des Verbindungsstücks in Richtung der Verbindungsebene erstreckt.

3. Verbindung mit einem doppelkonischen Gewindeverbindungsstück nach einem der beiden Ansprüche 1 oder 2, dadurch gekennzeichnet, dass das Verbindungsstück (N) zu beiden Seiten der Verbindungsebene (P) eine Zone (B) gleicher Neigung wie der der entsprechenden Ausnehmung zwischen zwei Zonen unterschiedlicher Neigung aufweist.

4. Verbindung nach einem der Ansprüche 1 bis 3, dadurch gekennzeichnet, dass eine Anschlagzone zwischen dem Drittel und der Hälfte der Gewindehöhe im Eingriff vorgesehen ist, wie sie in jeder Ausnehmung von deren Boden aus gemessen wird.

5. Verbindung nach Anspruch 4, dadurch gekennzeichnet, dass in der Anschlagzone die Flanke längs des Gewindes (2) des doppelkonischen Verbindungsstücks um 0,08 bis 0,20 mm in Richtung des Bodens der Ausnehmung abgesetzt ist.

6. Verbindung nach einem der beiden Ansprüche 1 oder 4, dadurch gekennzeichnet, dass das Gewinde jeder der Ausnehmungen zu beiden Seiten der Verbindungsebene wenigstens zwei Zonen mit von der mittleren Neigung des Verbindungsstücks verschiedenen Neigungen aufweist: eine Zone stärkerer Neigung, die sich von der Verbindungsebene in Richtung des Bodens der Ausnehmung erstreckt, und eine Zone schwächerer Neigung, die sich vom Boden der Ausnehmung in Richtung der Verbindungsebene erstreckt.

7. Verbindung nach einem der fünf Ansprüche 1, 2, 3, 4 oder 6, dadurch gekennzeichnet, dass in der Anschlagzone die Flanke längs des Gewindes der Ausnehmung um 0,08 bis 0,20 mm in Richtung der Verbindungsebene abgesetzt ist.

8. Verbindung nach einem der fünf Ansprüche 1, 2, 5, 6 oder 7, dadurch gekennzeichnet, dass sich die Neigung des Gewindes des doppelkonischen Verbindungsstücks oder der Ausnehmung kontinuierlich ändert.

## Claims

1. A connection comprising a screwthreaded biconical connector for a furnace electrode, wherein, on respective sides of the connecting plane (P), the clearance between the connector screwthread (N) and that of the recesses in the two electrodes (E1, E2) passes through a minimum value at a location which is disposed in the running part of the screwthread, characterised in that said location is disposed at between approximately a tenth and a quarter of the height of the screwthread in the position of engagement, as measured in each recess from the bottom thereof.

2. A furnace electrode connection according to claim 1, characterised in that, on respective sides of the connecting plane (P), the screwthread of the biconical connector comprises at least two regions having slopes which differ from the mean slope of the recess: a region (AB) with a shallower slope, which extends from the connecting plane towards the end of the connector, and a region (CB) with a steeper slope, which extends from the end of the connector towards the connecting plane.

3. A connection comprising a screwthreaded biconical connector according to claim 1 or 2, characterised in that, on respective sides of the connecting plane (P), the connector (N) has a region (B) with the same slope as that of the corresponding recess, said region being between two regions with different slopes.

4. A connection according to one of claims 1 to 3, characterised in that an abutment region is provided between a third and a half of the height of the screwthread in the position of engagement, as measured in each recess from the bottom thereof.

5. A connection according to claim 4, characterised in that, in the abutment region, the long flank of the screwthread (2) of the biconical connector is displaced by from 0.08 to 0.20 mm in the direction of the bottom of the recess.

6. A connection according to claim 1 or 4, characterised in that, on respective sides of the connecting plane, the screwthread of each of the recesses comprises at least two regions with slopes which differ from the mean slope of the connector: a region with a steeper slope, which extends from the connecting plane towards the bottom of the recess, and a region with a shallower slope, which extends from the bottom of the recess towards the connecting plane.

7.  A connection according to one of claims 1, 2, 3, 4, and 6, characterised in that, in the abutment region, the long flank of the screwthread of the recess is displaced by 0.08 to 0.20 mm in the direction of the connecting plane.

8.  A connection according to one of claims 1, 4, 5, 6, and 7, characterised in that the slope of the screwthread of the biconical connector or the recess varies continuously.

0 028 993

FIG.1

FIG.2

FIG.3

7